# EUROPEAN PATENT SPECIFICATION

(11) **EP 3 839 792 B1**
(45) Date of publication and mention of the grant of the patent: **09.03.2022**
(21) Application number: 20170611.6
(22) Date of filing: 21.04.2020
(51) Int. Cl.: G06F 21/79, G06F 21/76, G06F 21/75, G06F 21/78, G06F 21/64, G11C 17/16, G11C 17/18

(54) **METHOD FOR SECURE LIFECYCLE TRACKING WITH EMBEDDED FUSES USING KEY BASED THERMOMETER CODE SCRAMBLING**
VERFAHREN ZUR SICHEREN LEBENSZYKLUSVERFOLGUNG MIT EINGEBETTETEN SICHERUNGEN UNTER VERWENDUNG VON SCHLÜSSELBASIERTER THERMOMETERCODEVERWÜRFELUNG
PROCÉDÉ DE SUIVI DU CYCLE DE VIE SÉCURISÉ AVEC DES FUSIBLES INTÉGRÉS EN UTILISANT LE BROUILLAGE DE CODES DE THERMOMÈTRE BASÉ SUR DES CLÉS

(30) Priority: 16.12.2019 EP 19216652
(43) Date of publication of application: 23.06.2021
(73) Proprietor: Shenzhen Goodix Technology Co., Ltd., Shenzhen, Guangdong 518045 (CN)
(72) Inventor: Fröhlich, Martin, 01099 Dresden (DE)
(74) Representative: Lippert Stachow Patentanwälte Rechtsanwälte Partnerschaft mbB

(56) References cited:
- US-A1- 2018 075 888
- US-A1- 2018 248 688
- US-A1- 2019 042 118

## Description

The invention relates to a method for secure lifecycle tracking information of a microchip using e-fuses, whereas the microchip is identified with a unique key, the lifecycle tracking information is monitored by a counter value of a counter unit and the counter values are stored on the microchip by setting e-fuse bits in e-fuses.

Microchips for security relevant applications require an on chip storage for lifecycle relevant information. Lifecycle relevant information, e. g. software version, chip status, etc., are stored as a counter. The counter must not be rolled back. Usually on-chip electrical writeable fuses, so-called embedded e-fuses, are used. This e-fuses store information persistently and can only be set from logical zero to one.

Counter values, stored by setting such e-fuses, are represented as thermometer code (unary coding). For each counter increment an e-fuse bit will be written. Thus, the number of written e-fuses represents the counter value.

E-fuses can be used for 'chip ID' memory and tracing functions, and key ROM storage for secure data transmission.

Written e-fuse bits cannot be set back to logical zero with on chip mechanism. Because writing an e-fuse bit burns or destroys a resistor with a high current.

For cryptographic applications, it could be important to roll back e-fuse based counters to get access to information that where not restricted in a former lifecycle stage. An example could be an embedded SIM: after the manufacturing of the SIM the secure sim application allows the setting configuration parameters or allows the writing of keys. After this is done the life-cycle counter is incremented and the sim application prevents further setting of the configuration parameter of re-writing of the keys. For the application it is important that the counter cannot be rolled back. However, attackers have an interest to roll back the counter.

Sophisticated attackers are capable to identify e-fuse macros and their bits in the chip due to the regular structure of the e-fuse macro. Furthermore they are able to "repair" single e-fuse bits, reset them from logical one to zero which could be done with a focused ion beam (FIB). A FIB is able to add material at the chip to "repair" the burned fuse.

The e-fuses on a microchip can be configured as a fully integrated one-time-programmable macro. In IC-development self-containing hardware blocks (like the e-fuse block) are called (hard-) macro. The programming can be performed either by the customer of the microchip or by the manufacturer of the microchip during IC testing.

According to the above described problems it is an objective of the present invention to provide a method that hinders a physical manipulation of e-fuse based lifecycle counters by attackers.

The objective of the invention will be solved by means of a permutation performed by a deterministic algorithm using the microchip unique key as a random seed, the e-fuse values are shuffled and re-mapped to the counter values, thereby enabling the e-fuse values to be uniquely assigned to the counter values.

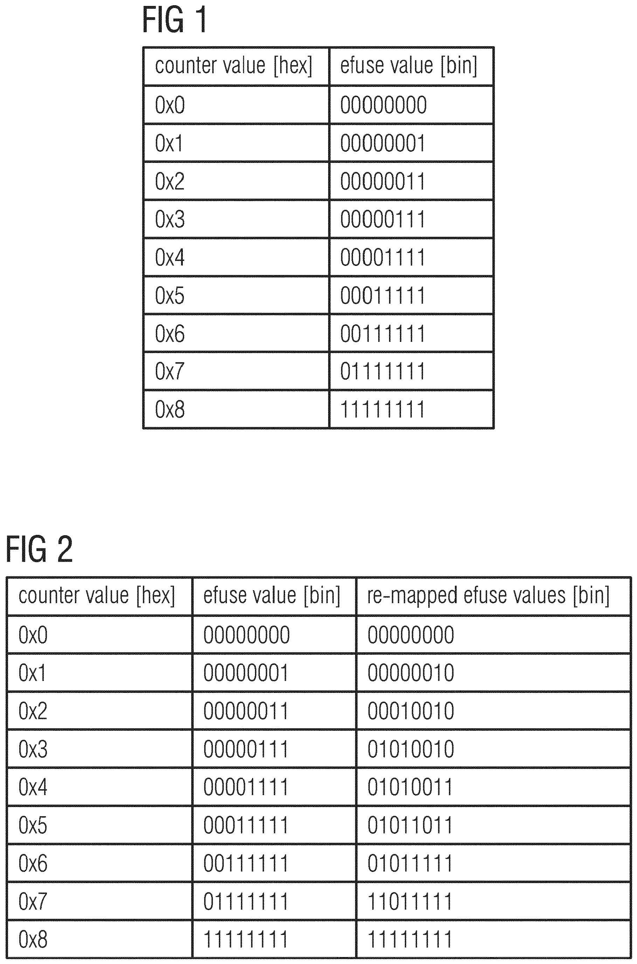

Usually, monotonic counters are used in secure microchips for tracking of the lifecycle state or firmware version etc. Therefore, thermometer codes are used to store the monotonic counter in e-fuses on the microchips, as shown in table 1 of figure 1. Incrementing the counter value by 1 continuously, corresponds to set only one additionally e-fuse bit. Table 1 in figure 1 shows the thermometer code mapping of increasing counter values to eight e-fuse bits.

Efuse bits can only be written once. This prevents rolling back of the stored counter value. Nevertheless, sophisticated attackers are able to reset single or multiple efuse bits. Thus, they are able to roll back old counter values and manipulate the microchip/system (gain access, unlock restrictions, switch back to old firmware versions).

The central idea of the present invention is that the permutation results in an obfuscation of the counter values. The mapping of the e-fuse values to the counter values must be microchip unique, so the deterministic algorithm that performs the permutation must be based on a microchip unique value. For the microchip unique value a microchip unique key is used which is programmed during chip testing after the production and hence assigned to the microchip. As a consequence, the microchip unique, e-fuse bit permutation prevents that an attack could reconstruct a previous counter value (or makes the reconstruction harder).

Hence, the advantage of using said permutation is that the counter value obfuscation prevents the reconstruction of previous counter values as long as the microchip unique value or the mapping function, hence the deterministic algorithm are unknown to an attacker.

In a variant of the inventive method, for the permutation a random shuffle algorithm is used. Instead of random seeds the shuffle algorithm uses the microchip unique key. All random shuffle algorithms can be used. Instead of random numbers a fixed value (e. g. the chip ID) is used. This leads to a deterministic behavior.

One example for a random shuffle algorithm is the Fisher-Yates shuffle algorithm. The Fisher-Yates shuffle is an algorithm for generating a random permutation of a finite sequence - in plain terms, the algorithm shuffles the sequence.

In a variant of the inventive method, one e-fuse bit is set per counter increment, defining a hamming distance equal to 1. In information theory, the hamming distance between two strings of equal length is the number of positions at which the corresponding symbols are different. In other words, it measures the minimum number of substitutions required to change one string into the other. In a more general context, the hamming distance is one of several string metrics for measuring the edit distance between two sequences. With a hamming distance equal to 1 only one e-fuse bit is set per counter increment. This means for an attacker that he has to change only one e-fuse bit to guess a previous counter value.

In another variant of the inventive method, two or more efuse bits are set per counter increment, defining a hamming distance bigger than 1. Instead of setting only one e-fuse bit per counter increment (hamming distance = 1), multiple (two or more) bits are set (hamming distance > 1). A hamming distance bigger than 1 requires more e-fuse bits to store a counter value.

For both above mentioned variants the hamming distance between consecutive counter values must be microchip specific. In order to reduce scalability of attacks it is advised to have as much as possible chip specific.

In a variant of the inventive method, if the e-fuse bits are set to an invalid value, an attack will be detected by the microchip and will be handled accordingly. Handling accordingly means e. g. performing a device reset, a stop execution, destroying secret keys, etc.

The invention will be explained in more detail using exemplary embodiments.

The appended drawings show
- Fig. 1: Counter value to eight bit e-fuse thermometer code mapping according to the state-of-the-art;
- Fig. 2: Exemplary remapping of the counter values to the e-fuse values according to the inventive method;
- Fig. 3: Exemplary sparse remapping of the counter values to the e-fuse values according to a variant of the inventive method.

Table 2 in figure 2 shows the remapping of the counter values to the e-fuse values using means of a permutation performed by a deterministic algorithm. The algorithm uses the microchip unique key as a random seed in order to shuffle and re-map the e-fuse values to the counter values, thereby enabling the e-fuse values to be uniquely assigned to the counter values. Using a microchip unique key as a random seed for the permutation function ensures a microchip or device unique e-fuse bit mapping. An example for a deterministic algorithm is the Fisher-Yates shuffle algorithm.

If an attacker wants to rollback an old value, he has to "repair" one or multiple e-fuse bits. Since the e-fuse mapping is microchip or device specific the attacker has to guess the e-fuse pattern of a previous pattern. If the efuse bits are set to an invalid value, the attack will be detected by the microchip and can be handled accordingly. Handling accordingly means that for example all secret keys will be destroyed.

If an attacker sets all e-fuse bits back to zero the microchip will detect the blank state. In blank state, the microchip must do the initialization of the lifecycle counter. Thus, it sets the counter to the first value and writes the first e-fuse bit. If the e-fuse bits were manipulated, the writing of the first bit will not be possible and the microchip can handle the attack accordingly.

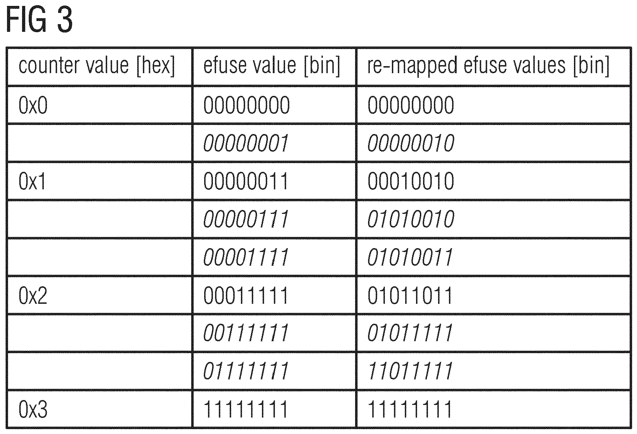

Table 3 in figure 3 shows a further embodiment of the inventive method. In order to reduce the likelihood that an attacker could guess a previous counter value correctly it is recommended to use sparse e-fuse counter value. Instead of setting only one e-fuse bit per counter increment corresponding to a hamming distance equal to 1, multiple, hence two or more bits are set which correspond to a hamming distance bigger than 1. In table 3, rows that are shown in italics in comparison to table 2 are not used for a counter value and hence not used as an e-fuse value in order to implement a hamming distance bigger than 1. The hamming distance between consecutive counter values must be microchip/device specific. This improvement requires more efuse bits to store a counter value.

The inventive method can be used in all microchip projects where lifecycle counters are stored in embedded e-fuse securely, i.e. in Narrowband - Internet-of-Things modems with integrated iSIM.

## Claims

1. A method for secure lifecycle tracking information of a microchip using e-fuses, whereas the microchip is identified with a unique key, the lifecycle tracking information is monitored by a counter value of a counter unit and counter values are stored on the microchip by setting e-fuse bits in e-fuses, **wherein** by means of a permutation performed by a deterministic algorithm using the microchip unique key as a random seed, the e-fuse bits representing e-fuse values are shuffled and re-mapped to the counter values, thereby enabling the e-fuse values to be uniquely assigned to the counter values.

2. The method for secure lifecycle tracking information of a microchip using e-fuses according to claim 1, wherein for the permutation a random shuffle algorithm is used.

3. The method for secure lifecycle tracking information of a microchip using e-fuses according to claim 1, wherein one e-fuse bit is set per counter increment, defining a hamming distance equal to 1.

4. The method for secure lifecycle tracking information of a microchip using e-fuses according to claim 1, wherein two or more e-fuse bits are set per counter increment, defining a hamming distance bigger than 1.

5. The method for secure lifecycle tracking information of a microchip using e-fuses according to claim 4, wherein the hamming distance between consecutive counter values is microchip specific.

6. The method for secure lifecycle tracking information of a microchip using e-fuses according to claim 1, wherein if the e-fuse bits are set to an invalid value, an attack will be detected by the microchip and will be handled accordingly.

## Patentansprüche

1. Verfahren für sichere Lebenszyklusverfolgungsinformationen eines Mikrochips unter Verwendung von eFuses, wobei der Mikrochip mit einem eindeutigen Schlüssel identifiziert wird, die Lebenszyklusverfolgungsinformationen durch einen Zählerwert einer Zählereinheit überwacht werden und die Zählerwerte durch das Einstellen von eFuse-Bits in eFuses auf dem Mikrochip gespeichert werden, wobei mittels einer Permutation, die durch einen deterministischen Algorithmus unter Verwendung des eindeutigen Schlüssels des Mikrochips als einen zufälligen Startwert durchgeführt wird, die eFuse-Bits, die eFuse-Werte darstellen, umsortiert werden und auf die Zählerwerte neu abgebildet werden, wodurch die eFuse-Werte den Zählerwerten eindeutig zugeordnet werden können.

2. Verfahren für sichere Lebenszyklusverfolgungsinformationen eines Mikrochips unter Verwendung von eFuses nach Anspruch 1, wobei für die Permutation ein zufälliger Umsortieralgorithmus verwendet wird.

3. Verfahren für sichere Lebenszyklusverfolgungsinformationen eines Mikrochips unter Verwendung von eFuses nach Anspruch 1, wobei ein eFuse-Bit pro Zählerinkrement eingestellt wird, wodurch ein Hamming-Abstand gleich 1 definiert wird.

4. Verfahren für sichere Lebenszyklusverfolgungsinformationen eines Mikrochips unter Verwendung von eFuses nach Anspruch 1, wobei zwei oder mehr eFuse-Bits pro Zählerinkrement eingestellt werden, wodurch ein Hamming-Abstand größer als 1 definiert wird.

5. Verfahren für sichere Lebenszyklusverfolgungsinformationen eines Mikrochips unter Verwendung von eFuses nach Anspruch 4, wobei der Hamming-Abstand zwischen aufeinanderfolgenden Zählerwerten mikrochipspezifisch ist.

6. Verfahren für sichere Lebenszyklusverfolgungsinformationen eines Mikrochips unter Verwendung von eFuses nach Anspruch 1, wobei dann, wenn die eFuse-Bits auf einen ungültigen Wert eingestellt werden, ein Angriff durch den Mikrochip detektiert wird und dementsprechend behandelt wird.

## Revendications

1. Procédé de suivi sécurisé de cycle de vie d'informations d'une micropuce à l'aide de fusibles électroniques, alors que la micropuce est identifiée par une clé unique, les informations de suivi de cycle de vie sont surveillées par une valeur de compteur d'une unité de compteur et des valeurs de compteur sont stockées sur la micropuce en réglant des bits de fusibles électroniques dans des fusibles électroniques, dans lequel au moyen d'une permutation effectuée par un algorithme déterministe utilisant la clé unique de la micropuce comme valeur germe aléatoire, les bits de fusibles électroniques représentant des valeurs de fusibles électroniques sont brassés et remappés sur les valeurs de compteur, permettant ainsi d'attribuer de manière unique les valeurs de fusibles électroniques aux valeurs de compteur.

2. Procédé de suivi sécurisé de cycle de vie d'informations d'une micropuce à l'aide de fusibles électroniques selon la revendication 1, dans lequel un algorithme aléatoire de brassage est utilisé pour la permutation.

3. Procédé de suivi sécurisé de cycle de vie d'informations d'une micropuce à l'aide de fusibles électroniques selon la revendication 1, dans lequel un bit de fusible électronique est réglé par incrément de compteur, définissant une distance de Hamming égale à 1.

4. Procédé de suivi sécurisé de cycle de vie d'informations d'une micropuce à l'aide de fusibles électroniques selon la revendication 1, dans lequel deux ou plusieurs bits de fusible électronique sont réglés par incrément de compteur, définissant une distance de Hamming supérieure à 1.

5. Procédé de suivi sécurisé de cycle de vie d'informations d'une micropuce à l'aide de fusibles électroniques selon la revendication 4, dans lequel la distance de Hamming entre des valeurs de compteur consécutives est spécifique à la micropuce.

6. Procédé de suivi sécurisé de cycle de vie d'informations d'une micropuce à l'aide de fusibles électroniques selon la revendication 1, dans lequel si les bits de fusibles électroniques sont réglés à une valeur non valide, une attaque sera détectée par la micropuce et gérée en conséquence.
